# EUROPEAN PATENT APPLICATION

(11) **EP 4 213 165 A1**
(43) Date of publication of application: **19.07.2023**
(21) Application number: 21888399.9
(22) Date of filing: 20.10.2021
(51) Int. Cl.: H01F 1/147, H01F 41/02

(54) **IRON-BASED AMORPHOUS ALLOY POWDER, PREPARATION METHOD THEREFOR AND APPLICATION THEREOF**

(30) Priority: 09.11.2020 CN 202011242333
(71) Applicant: Hengdian Group DMEGC Magnetics Co., Ltd., Jinhua, Zhejiang 322118 (CN)
(72) Inventor: FANG, Meng, Jinhua, Zhejiang 322118 (CN); DU, Yangzhong, Jinhua, Zhejiang 322118 (CN); LU, Junwei, Jinhua, Zhejiang 322118 (CN); LOU, Haifei, Jinhua, Zhejiang 322118 (CN); WANG, Linke, Jinhua, Zhejiang 322118 (CN); DU, Yuchao, Jinhua, Zhejiang 322118 (CN)
(74) Representative: Ricker, Mathias
(86) International application number: PCT/CN2021/125034
(87) International publication number: WO 2022/095702

(57) **Abstract**

The present application provides an iron-based amorphous alloy powder, a preparation method therefor and an application thereof. The iron-based amorphous alloy powder comprises a Cu element, and the particle shape of the iron-based amorphous alloy powder is spherical. The preparation method comprises the following steps: (1) smelting a master alloy to obtain iron-based amorphous alloy molten iron, the master alloy comprising a Cu element; and (2) treating the iron-based amorphous alloy molten iron obtained in step (1) by means of water-gas combined atomization to obtain the iron-based amorphous alloy powder.

## Description

### TECHNICAL FIELD

The present application belongs to the field of magnetic materials and relates to an iron-based amorphous alloy powder, a preparation method thereof and use thereof.

### BACKGROUND

With the development trend of miniaturization and high frequency of magnetic devices in the future, more and more demanding requirements have been put forward for magnetic materials. There is a high requirement for the integrated characteristics of the materials, including high magnetic permeability, high saturation current and low loss. As a core component of magnetic devices, the material properties of the magnetic core directly determine the device characteristics. Therefore, it is crucial to develop a magnetic material with the all above-mentioned excellent integrated characteristics.

Although possessing the characteristics of high magnetic permeability and low loss, ferrite materials are limited by the extremely low saturation current in applications. Conventional soft magnetic alloys include FeNi, FeSi, FeSiAl, FeSiCr and carbonyl iron have their own characteristics. For example, FeNi has high magnetic permeability but ordinary loss, FeSiAl has high magnetic permeability and low loss but poor saturation current, and the carbonyl iron powder has excellent saturation current but ordinary magnetic permeability and loss. As mentioned above, the above materials are limited by their disadvantages in applications. However, the amorphous soft magnetic alloy has high magnetic permeability, high saturation and low loss, which has been increasingly widely used in high frequency devices.

CN1356403A discloses an iron-based amorphous alloy thin strip with good soft magnetic properties for alternating current applications, which can maintain high magnetic flux density even at high iron content. The thin strip can be used to prepare an iron core with good soft magnetic properties even in the case where different parts of the iron core have temperature difference during annealing. The Fe-based amorphous alloy thin strip of this invention has high magnetic flux density and mainly contains Fe, Si, B, C and P elements as well as inevitable impurities, which is characterized in that its composition is by atomic percentage: 82s value is 1.74T, B80 value is more than 1.5T, and iron loss value is 0.12W/kg or less. However, due to the high Fe content, the thin strip has poor amorphous formation ability, which thereby cannot form amorphous state in the industrial production, and the strip has poor magnetic properties. Meanwhile, on the one hand, the addition of P element is not mentioned in this patent; on the other hand, the addition content of P element is large, and in view of the facts in the ferrophosphorus industry at home and abroad that the preparation conditions of ferrophosphorus is relatively crude, the impurity content is too high, and the application requirements of the amorphous alloy cannot be satisfied. In the preparation process, using a large number of ferrophosphorus prepared under conventional conditions will cause the strip to be crystallized and brittle and have poor performance after heat treatment. If this alloy composition is put into industrial production, a ferrophosphorus refining part must be added, which, on the one hand, increases the process complexity, and on the other hand, requires improving the current smelting level, increasing the industrial production difficulty.

CN101840764A discloses a high saturation magnetic induction strength amorphous alloy. Its preferred component silicon has a high content of more than 5%. The amorphous formation ability is poor. In addition, in the embodiments of this patent, different alloys with similar components have greatly different saturation magnetic induction strength values, indicating that the alloy with such compositions is poorly reproducible in the preparation process, which results in that different alloy samples with similar components have greatly different amorphous state proportions.

For the future development trend of miniaturization and high frequency of electronic devices, there is an increasing demand for high magnetic permeability, excellent superposition current and low magnetic core loss of magnetic materials. Due to the high intrinsic resistivity and magnetocrystalline isotropy of the amorphous material, the amorphous material has the characteristics of high magnetic permeability and low loss, and the spherical powder morphology gives the material high superposition current.

It has been an urgent technical problem to be solved about how to obtain an amorphous material with high magnetic permeability, high saturation and low loss, which has lower glass transition temperature, lower crystallization temperature and also better amorphous formation ability and electromagnetic characteristics.

### SUMMARY

An object of the present application is to provide an iron-based amorphous alloy powder, a preparation method thereof and use thereof. The present application adopts a method of melting-water-gas combined atomization to prepare an iron-based amorphous alloy powder, and the powder has a lower glass transition temperature, lower crystallization temperature, better amorphous formation ability and better electromagnetic characteristics, and also has high magnetic permeability, high saturation and low loss.

To achieve the object of the present application, the present application adopts the technical solutions below.

In a first aspect, the present application provides an iron-based amorphous alloy powder, and the iron-based amorphous alloy powder includes a Cu element; the iron-based amorphous alloy powder has a spherical particle shape.

In the present application, an atomic radius of Cu atom is similar to Fe atom, therefore, Cu will take Fe atom position, and during heat treatment Cu atoms are easily clustered by thermal diffusion and thus provide nucleating position for nanocrystallization. Hence, by adding the Cu element, the powder can easily form nanocrystalline during the heat treatment to reduce hysteresis loss, and thus the overall loss decreases; meanwhile, if the Cu element content is too high, the nanocrystalline particles will grow excessively and cause an increased loss; the iron-based amorphous alloy powder has a spherical particle shape, which facilitates a high superposition current.

Optionally, the iron-based amorphous alloy powder includes a metalloid element and a main transition metal element.

Optionally, the metalloid element includes any one or a combination of at least two of B, P, Si or C.

Optionally, the main transition metal element includes Ni and/or Cr.

Optionally, the iron-based amorphous alloy powder further includes a trace transition metal element.

Optionally, the trace transition metal element includes any one or a combination of at least two of V, Mn or Zn.

Trace elements such as V, Mn, Zr, etc. have a large negative mixing enthalpy with Fe, the amorphous formation ability can be enhanced by adding an appropriate amount of the trace elements, and meanwhile, the larger atomic radius than Fe atoms prevents the atomic diffusion during the amorphous heat treatment, thus inhibiting the excessive growth of nanocrystalline grains. The nanocrystalline grains that grows excessively will cause the loss to increase sharply. Accordingly, the addition of the V, Mn and Zr elements is benefit to a low loss of the material.

Optionally, the iron-based amorphous alloy powder has a chemical formula of aFe-bSi-cB-dP-eC-fNi-gCr-hCu-iV-jMn-kZn.

Optionally, an atomic percentage of each element in the chemical formula is 64.8%≤a≤80.2%, 0%≤b≤2%, 5%≤c≤10%, 3%≤d≤6.2%, 1.2%≤e≤5.5%, 0.5%≤f≤4%, 1%<g<5%, 0.1%≤h≤1.5%, 0%≤i≤0.2%, 0%≤j≤0.6%, 0%≤k≤0.2%; and optionally 64.8%≤a≤80.2%,0%≤b≤2%, 5%≤c≤8%, 4%≤d≤6%, 3%≤e≤5%, 1%<f<3%, 2%≤g≤4%, 0.5%≤h≤1.2%, 0.02%≤1≤0.12%, 0.1%≤j≤0.4%, 0.1%<k<0.15%.

For example, the atomic percentage of the Fe element in the iron-based amorphous alloy powder includes 64.8%, 65%, 68%, 70%, 72%, 74%, 76%, 78%, 80% or 80.2%, etc.

For example, the atomic percentage of the Si element in the iron-based amorphous alloy powder includes 0%, 0.2%, 0.4%, 0.6%, 0.8%, 1.0%, 1.2%, 1.4%, 1.6%, 1.8% or 2.0%, etc.

For example, the atomic percentage of the B element in the iron-based amorphous alloy powder includes 5%, 5.5%, 6%, 6.5%, 7%, 7.5%, 8%, 8.5%, 9%, 9.5% or 10%, etc.

For example, the atomic percentage of the P element in the iron-based amorphous alloy powder includes 3%, 3.5%, 4%, 4.5%, 5%, 5.5%, 6% or 6.2%, etc.

For example, the atomic percentage of the C element in the iron-based amorphous alloy powder includes 1.2%, 1.6%, 2.0%, 2.5%, 3%, 3.5%, 4%, 4.5%, 5% or 5.5%, etc.

For example, the atomic percentage of the Ni element in the iron-based amorphous alloy powder includes 0.5%, 0.8%, 1%, 1.3%, 1.5%, 1.8%, 2%, 2.3%, 2.5%, 2.8%, 3%, 3.5% or 4%, etc.

For example, the atomic percentage of the Cr element in the iron-based amorphous alloy powder includes 1%, 1.5%, 2%, 2.5%, 3%, 3.5%, 4%, 4.5% or 5%, etc.

For example, the atomic percentage of the Cu element in the iron-based amorphous alloy powder includes 0.1%, 0.3%, 0.5%, 0.8%, 1.0%, 1.2%, 1.4% or 1.5%, etc.

For example, the atomic percentage of the V element in the iron-based amorphous alloy powder includes 0%, 0.02%, 0.04%, 0.06%, 0.08%, 0.1%, 0.12%, 0.14%, 0.16%, 0.18% or 0.2%, etc.

For example, the atomic percentage of the Mn element in the iron-based amorphous alloy powder includes 0%, 0.05%, 0.1%, 0.15%, 0.2%, 0.25%, 0.3%, 0.35%, 0.4%, 0.45%, 0.5%, 0.55% or 0.6%, etc.

For example, the atomic percentage of the Zn element in the iron-based amorphous alloy powder includes 0%, 0.02%, 0.04%, 0.06%, 0.08%, 0.1%, 0.12%, 0.14%, 0.16%, 0.18% or 0.2%, etc.

Due to the lower potential than the Fe element, the Cr element can be more easily oxidized than Fe, thus protecting the Fe element from rusting, and it is better to have higher Cr element content; meanwhile, although the electrode potential of Ni element is higher than that of Fe element, the electrode potential differences between the Ni-rich and Ni-poor regions which contain Ni are similar in the particles, which thereby can improve the corrosion resistance of the alloy, and the higher the Ni content, the better the corrosion resistance of the alloy. However, the high content of Cr and Ni atoms will lead to a decreased saturation of the material. Therefore, in view of both rust protection and electromagnetic characteristics, the atomic percentages of the Cr and Ni elements in the alloy should be controlled at 2-4% and 1-3%, respectively.

In the present application, the atomic percentage of the Cu element is controlled at 0.1-1.5%, because when there are too many Cu atoms in the iron-based amorphous alloy powder, the nucleating points will be superfluous, and the probability of the nanocrystalline nucleating points close to each other to merge and grow will increase, resulting in larger nanocrystalline grain size and increased loss.

Optionally, a sum of the atomic percentages of B, P and C in the metalloid element is 14%-18%, such as 14%, 15%, 16%, 17% or 18%, etc.

In the present application, atomic radius of metalloid elements such as B, P and C is smaller than that of Fe, which has large negative enthalpy when mixed with the Fe element, and thereby, the amorphous formation ability will be improved by increasing their proportion. However, the saturation characteristics of the material will be reduced with the high proportion of metalloid elements, and at the same time lead to high hardness of the powder material, which is not conducive to the press molding of the material.

Optionally, the iron-based amorphous alloy powder has a D10 of 2-5 µm, such as 2 µm, 2.5 µm, 3 µm, 3.5 µm, 4 µm, 4.5 µm and 5 µm, etc.

Optionally, the iron-based amorphous alloy powder has a D50 of 8-12 µm, such as 8 µm, 8.5 µm, 9 µm, 9.5 µm, 10 µm, 10.5 µm, 11 µm, 11.5 µm or 12 µm, etc.

Optionally, the iron-based amorphous alloy powder has a D90 of 20-30 µm, such as 20 µm, 21 µm, 22 µm, 23 µm, 24 µm, 25 µm, 26 µm, 27 µm, 28 µm, 29 µm or 30 µm, etc.

In a second aspect, the present application provides a preparation method of an iron-based amorphous alloy powder according to the first aspect, and the preparation method includes the following steps:
(1) melting a master alloy to obtain an iron-based amorphous alloy iron fluid; the master alloy includes a Cu element;
(2) treating the iron-based amorphous alloy iron fluid in step (1) by a water-gas combined atomization to obtain the iron-based amorphous alloy powder.

In the present application, the master alloy has a chemical formula of aFe-bSi-cB-dP-eC-fNi-gCr-hCu-iV-jMn-kZn.

The present application adopts the method of water-gas combined atomization to prepare the iron-based amorphous alloy powder. The water atomization process only uses water as the medium, the medium impulse is large and the powder cooling speed is fast, and thereby, the obtained powder has unsatisfactory morphology, and the particle component is prone to segregation and crystallization; the gas atomization only uses inert gas as the medium, the medium impulse is small and the powder cooling speed is slow, and thereby, the powder has better morphology and more uniform composition, but the exceedingly slow cooling speed will allow the grain growing and cause crystallization. Therefore, the method of water-gas combined atomization combines the advantages of both to obtain a powder with better morphology and higher amorphous degree. All the obtained alloy powders with different compositions are gas-flow graded to satisfy different particle size requirements.

Optionally, the melting in step (1) has a temperature of 1300-1500°C, such as 1300°C, 1350°C, 1400°C, 1450°C or 1500°C, etc.

Optionally, the melting in step (1) has a time of 80-150 min, such as 80 min, 90 min, 100 min, 110 min, 120 min, 130 min, 140 min or 150 min, etc.

Optionally, the water-gas combined atomization treatment in step (2) includes feeding the iron-based amorphous alloy iron fluid in step (1) into an atomization tower, then breaking the iron-based amorphous alloy iron fluid in step (1) into fine metal droplets by applying water and gas atomization media to the iron-based amorphous alloy iron fluid in step (1) in the atomization tower, and then cooling the fine metal droplets to obtain the iron-based amorphous alloy powder treated by the water-gas combined atomization.

Optionally, the water has a pressure of 100-150 MPa, such as 100 MPa, 110 MPa, 120 MPa, 130 MPa, 140 MPa or 150 MPa, etc.

Optionally, the gas has a pressure of 0.5-1.0 MPa, such as 0.5 MPa, 0.6 MPa, 0.7 MPa, 0.8 MPa, 0.9 MPa or 1.0 MPa, etc.

Optionally, the gas is a protective gas.

Optionally, the protective gas includes N₂ and Ar₂

Optionally, the iron-based amorphous alloy powder treated by the water-gas combined atomization is further baked and gas-flow graded.

As an optional technical solution of the present application, the preparation method of the iron-based amorphous alloy powder includes the following steps:
(1) melting a master alloy at 1300-1500°C for 80-150 min to obtain an iron-based amorphous alloy iron fluid; the master alloy includes a Cu element;
(2) feeding the iron-based amorphous alloy iron fluid in step (1) into an atomization tower, then breaking the iron-based amorphous alloy iron fluid in step (1) into fine metal droplets by applying water and N₂ atomization media, which have pressures of 100-150 MPa and 0.5-1.0 MPa, respectively, to the iron-based amorphous alloy iron fluid in step (1) in the atomization tower, then cooling the fine metal droplets, and then performing baking and gas-flow grading to obtain the iron-based amorphous alloy powder.

In a third aspect, the present application provides a magnetic powder core, and the magnetic powder core includes the iron-based amorphous alloy powder according to the first aspect, a first inorganic layer coated on the surface of the iron-based amorphous alloy powder, a second inorganic layer coated on the surface of the first inorganic layer, and an organic layer coated on the surface of the second inorganic layer.

Optionally, the first inorganic layer includes phosphate.

Optionally, the second inorganic layer includes any one or a combination of at least two of sodium silicate, potassium silicate, a silane coupling agent, magnesium silicate, or nano SiO₂.

Optionally, the organic layer includes a resin.

Optionally, the resin includes any one or a combination of at least two of polyvinyl butyral, an epoxy resin, a silicone resin or a phenolic resin.

In a fourth aspect, the present application also provides a preparation method of the magnetic powder core according to the third aspect, and the preparation method includes coating the first inorganic layer, the second inorganic layer and the organic layer in sequence on the surface of the iron-based amorphous alloy powder according to the first aspect, and then performing sintering.

In the present application, the sintering is required because of the stress in the molded powder, which causes a significant deterioration in terms of magnetic permeability and hysteresis loss. Additionally, the amorphous alloy has a tendency to partially nanocrystallize during the heat treatment, which can further reduce the material loss.

Sintering temperature and time have a great influence on the process of nanocrystal precipitation of the iron-based amorphous alloy powder in the present application. The high sintering temperature and the long sintering time tend to give large nanocrystalline grain size and the formation of some compounds such as FeP and FeB, which directly leads to extremely high magnetic permeability and loss, while the low temperature and the short time tend to cause insignificant nanocrystal precipitation, which brings no significant improvement to the characteristics.

Optionally, the sintering has a temperature of 340-440°C, such as 340°C, 350°C, 360°C, 370°C, 380°C, 390°C, 400°C, 410°C, 420°C, 430°C or 440°C, etc., optionally 360-400°C.

Optionally, the sintering has a time of 0.5-4 h, such as 0.5 h, 1 h, 1.5 h, 2 h, 2.5 h, 3 h, 3.5 h or 4 h, etc., optionally 1.5-2.5 h.

Compared with the prior art, the present application has the following beneficial effects.
(1) In the iron-based amorphous alloy powder provided by the present application, the atomic radius of Cu is similar to Fe atoms, Cu will take Fe atom position, and during heat treatment Cu atoms are easily clustered by thermal diffusion and thus provide nucleating position for nanocrystallization; atomic radius of metalloid elements such as B, P and C is smaller than that of Fe atomic radius, which has large negative enthalpy when mixed with the Fe element, and thereby, the amorphous formation ability will be increased by increasing their proportion; due to the lower potential than the Fe element, the Cr element can be more easily oxidized than Fe, thus protecting the Fe element from rusting, and it is better to have higher Cr element content; meanwhile, although the electrode potential of Ni element is higher than that of Fe element, the electrode potential differences between the Ni-rich and Ni-poor regions which contain Ni are similar in the particles, which thereby can improve the corrosion resistance of the alloy, and the higher the Ni content, the better the corrosion resistance of the alloy; trace elements such as V, Mn, Zr, etc. have a large negative mixing enthalpy with Fe, the amorphous formation ability can be enhanced by adding an appropriate amount of the trace elements, and meanwhile, the larger atomic radius than Fe atoms prevents the atomic diffusion during the amorphous heat treatment, thus inhibiting the excessive growth of nanocrystalline grains. The performance of the iron-based amorphous alloy powder is influenced by the above elements collectively, including magnetic permeability, saturation and loss.
(2) The iron-based amorphous alloy powder provided in the present application has high magnetic permeability, high saturation and low loss; the magnetic permeability can reach more than or equal to 50, the loss (1 MHz@20 mT) is as low as 250 mW/cm³; and the powder has lower glass transition temperature, lower crystallization temperature and better amorphous formation ability and electromagnetic characteristics.

### BRIEF DESCRIPTION OF DRAWINGS

FIG. 1 is an SEM image of an iron-based amorphous alloy powder provided in Example 1.
FIG. 2 is a loss diagram of iron-based amorphous alloy powders with different Cu element contents provided in Examples 1-9 and Comparative Example 1.

### DETAILED DESCRIPTION

The technical solutions of the present application are further described below through embodiment. It should be apparent to those skilled in the art that the embodiments are only used for a better understanding of the present application and should not be regard as a specific limitation of the present application.

### Example 1

This example provides an iron-based amorphous alloy powder, the powder has a spherical particle shape, and the iron-based amorphous alloy powder has a chemical formula of Fe_{77.1}Si₁B₆P_{5.5}C_{4.5}Ni₂Cr₃Cu_{0.5}V_{0.1}Mn_{0.2}Zn_{0.1}.

A preparation method is as follows:
according to the chemical formula of the amorphous component, raw materials were fed into a medium frequency high temperature melting furnace, the master alloy was melted to 1400°C, the molten iron liquid was fed into an atomization tower, and the iron liquid was broken into fine metal droplets by applying high-pressure water and low-pressure gas atomization media to the alloy liquid, and the fine metal droplets were cooled to obtain the amorphous powder, in which the high-pressure water had a pressure of 120 MPa, and the gas had a pressure of 0.8 MPa; the Fe_{77.1}Si₁B₆P_{5.5}C_{4.5}Ni₂Cr₃Cu₃V_{0.1}Mn_{0.2}Zn_{0.1} amorphous alloy powder was prepared by the water-gas combined atomization;
the amorphous powder obtained from the water-gas combined atomization was passivated with 0.2wt% phosphoric acid, then coated with 0.2wt% potassium silicate, and then coated with a 0.6wt% epoxy resin for prilling; the 180 mesh powder was sieved and pressed into a magnetic ring with a magnetic powder core of 14mm*8mm*3mm at a press of 1600 MPa, and then sintered at 360°C under nitrogen atmosphere for 2 h; the molded magnetic ring was subjected to heat treatment and then wound 30 round for characteristic tests; the inductance was tested at 1 MHz&0.25 V, the superimposed current was 20 A, and the loss was tested at 1 MHz&20 mT.

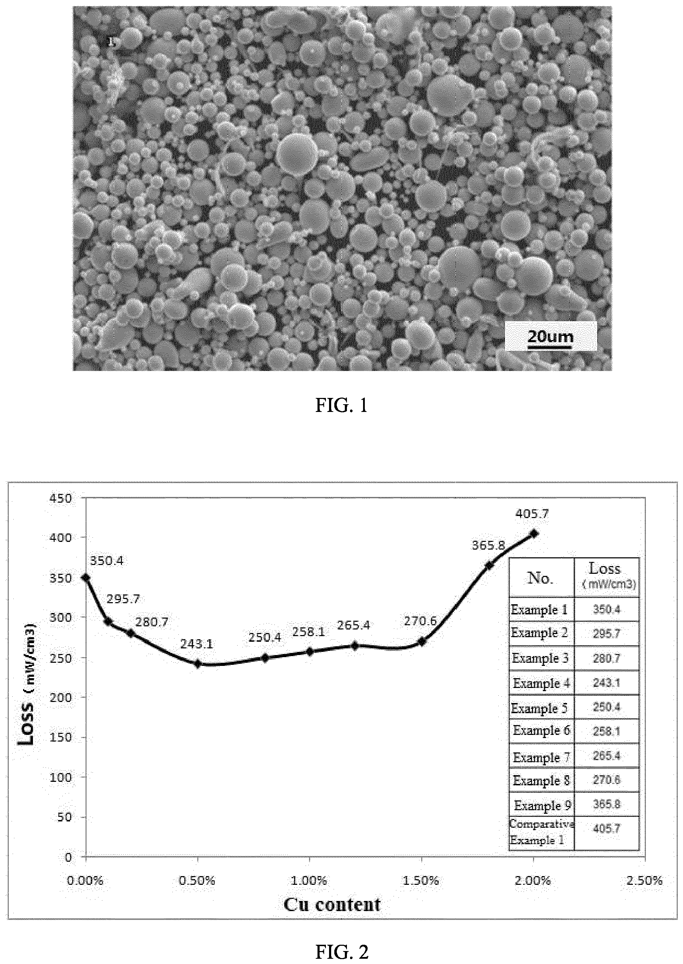

As can be seen from FIG. 1, the iron-based amorphous alloy powder provided in this example is obviously spherical particle.

### Example 2

This example provides an iron-based amorphous alloy powder, the powder has a spherical particle shape, and the iron-based amorphous alloy powder has a chemical formula of Fe_{77.3}Si₁B₆P_{5.5}C_{4.5}Ni₂Cr₃Cu_{0.2}V_{0.1}Mn_{0.2}Zn_{0.1}.

This example differs from Example 1 in that an atomic percentage of the Cu element is 0.2% in the powder of this example.

Other preparation methods and test conditions were the same as in Example 1.

### Example 3

This example provides an iron-based amorphous alloy powder, the powder has a spherical particle shape, and the iron-based amorphous alloy powder has a chemical formula of Fe_{77.4}Si₁B₆P_{5.5}C_{4.5}Ni₂Cr₃Cu_{0.1}V_{0.1}Mn_{0.2}Zn_{0.1}.

This example differs from Example 1 in that an atomic percentage of the Cu element is 0.1% in the powder of this example.

Other preparation methods and test conditions were the same as in Example 1.

### Example 4

This example provides an iron-based amorphous alloy powder, the powder has a spherical particle shape, and the iron-based amorphous alloy powder has a chemical formula of Fe_{76.8}Si₁B₆P_{5.5}C_{4.5}Ni₂Cr₃Cu_{0.8}V_{0.1}Mn_{0.2}Zn_{0.1}.

This example differs from Example 1 in that an atomic percentage of the Cu element is 0.8% in the powder of this example.

Other preparation methods and test conditions were the same as in Example 1.

### Example 5

This example provides an iron-based amorphous alloy powder, the powder has a spherical particle shape, and the iron-based amorphous alloy powder has a chemical formula of Fe_{76.6}Si₁B₆P_{5.5}C_{4.5}Ni₂Cr₃Cu_{1.0}V_{0.1}Mn_{0.2}Zn_{0.1}.

This example differs from Example 1 in that an atomic percentage of the Cu element is 1% in the powder of this example.

Other preparation methods and test conditions were the same as in Example 1.

### Example 6

This example provides an iron-based amorphous alloy powder, the powder has a spherical particle shape, and the iron-based amorphous alloy powder has a chemical formula of Fe_{76.4}Si₁B₆P_{5.5}C_{4.5}Ni₂Cr₃Cu_{1.2}V_{0.1}Mn_{0.2}Zn_{0.1}.

This example differs from Example 1 in that an atomic percentage of the Cu element is 1.2% in the powder of this example.

Other preparation methods and test conditions were the same as in Example 1.

### Example 7

This example provides an iron-based amorphous alloy powder, the powder has a spherical particle shape, and the iron-based amorphous alloy powder has a chemical formula of Fe_{76.1}Si₁B₆P_{5.5}C_{4.5}Ni₂Cr₃Cu_{1.5}V_{0.1}Mn_{0.2}Zn_{0.1}.

This example differs from Example 1 in that an atomic percentage of the Cu element is 1.5% in the powder of this example.

Other preparation methods and test conditions were the same as in Example 1.

### Example 8

This example provides an iron-based amorphous alloy powder, the powder has a spherical particle shape, and the iron-based amorphous alloy powder has a chemical formula of Fe_{75.8}Si₁B₆P_{5.5}C_{4.5}Ni₂Cr₃Cu_{1.8}V_{0.1}Mn_{0.2}Zn_{0.1}.

This example differs from Example 1 in that an atomic percentage of the Cu element is 1.8% in the powder of this example.

Other preparation methods and test conditions were the same as in Example 1.

### Example 9

This example provides an iron-based amorphous alloy powder, the powder has a spherical particle shape, and the iron-based amorphous alloy powder has a chemical formula of Fe_{75.6}Si₁B₆P_{5.5}C_{4.5}Ni₂Cr₃Cu_{2.0}V_{0.1}Mn_{0.2}Zn_{0.1}.

This example differs from Example 1 in that an atomic percentage of the Cu element is 2% in the powder of this example.

Other preparation methods and test conditions were the same as in Example 1.

### Comparative Example 1

This comparative example provides an iron-based amorphous alloy powder, the powder has a spherical particle shape, and the iron-based amorphous alloy powder has a chemical formula of Fe_{77.6}Si₁B₆P_{5.5}C_{4.5}Ni₂Cr₃V_{0.1}Mn_{0.2}Zn_{0.1}.

Other preparation methods and test conditions were the same as in Example 1.

It can be clearly seen from FIG. 2 that the atomic percentage of the Cu element in the present application significantly influences the loss value of the iron-based amorphous alloy powder. Too much or too little Cu element will have a negative effect on the iron-based amorphous alloy powder. In the case where the iron-based amorphous alloy powder contains no Cu element, the loss value is much higher than that of the iron-based amorphous alloy powder provided in Example 1, because Cu atoms can provide nucleating points for nanocrystallization; the Cu element content is too high in Examples 8 and 9, and the loss is high. As in Example 9, the high proportion of Cu element will lead to an increased probability of the nanocrystalline nucleating points close to each other to merge and grow, resulting in larger nanocrystalline grain size and increased loss value of the iron-based amorphous alloy powder.

Table 1 shows the properties of the iron-based amorphous alloy powders obtained from Examples 1-9 and Comparative Example 1.

**Table 1**

| | Chemical Formula | Magnetic Permeabilit y | Superpositi on Ratio (20 A) | Loss (1 MHz & 20 mT) | Glass Transition Temperatur e (°C) | Nano αFe Precipitatio n Temperatur e (°C) |
|---|---|---|---|---|---|---|
| Example 1 | Fe_{77.1}Si₁B₆ P_{5.5}C_{4.5}Ni₂ Cr₃Cu_{0.5}V_{0. 1}Mn_{0.2}Zn_{0.1} | 52.3 | 65.5% | 243.1 | 320°C | 360°C |
| Example 2 | Fe_{77.3}Si₁B₆ P_{5.5}C_{4.5}Ni₂ Cr₃Cu_{0.2}V_{0. 1}Mn_{0.2}Zn_{0.1} | 51.8 | 65.6% | 280.7 | 330°C | 375°C |
| Example 3 | Fe_{77.4}Si₁B₆ P_{5.5}C_{4.5}Ni₂ Cr₃Cu_{0.1}V_{0. 1}Mn_{0.2}Zn_{0.1} | 51.6 | 65.6% | 295.7 | 335°C | 380°C |
| Example 4 | Fe_{76.8}Si₁B₆ P_{5.5}C_{4.5}Ni₂ Cr₃Cu_{0.8}V_{0. 1}Mn_{0.2}Zn_{0.1} | 52.2 | 65.6% | 250.4 | 325°C | 365°C |
| Example 5 | Fe_{76.6}Si₁B₆ P_{5.5}C_{4.5}Ni₂ Cr₃Cu_{1.0}V_{0. 1}Mn_{0.2}Zn_{0.1} | 52.0 | 65.2% | 258.1 | 325°C | 365°C |
| Example 6 | Fe_{76.4}Si₁B₆ P_{5.5}C_{4.5}Ni₂ Cr₃Cu_{1.2}V₀. ₁Mn_{0.2}Zn_{0.1} | 51.7 | 65.2% | 265.4 | 325°C | 365°C |
| Example 7 | Fe_{76.1}Si₁B₆ P_{5.5}C_{4.5}Ni₂ Cr₃Cu_{1.5}V_{0. 1}Mn_{0.2}Zn_{0.1} | 51.3 | 65.0% | 270.6 | 330°C | 370°C |
| Example 8 | Fe_{75.8}Si₁B₆ P_{5.5}C_{4.5}Ni₂ Cr₃Cu_{1.8}V_{0. 1}Mn_{0.2}Zn_{0.1} | 50.4 | 64.8% | 365.8 | 335°C | 370°C |
| Example 9 | Fe_{75.6}Si₁B₆ P_{5.5}C_{4.5}Ni₂ Cr₃Cu_{2.0}V_{0. 1}Mn_{0.2}Zn_{0.1} | 49.6 | 64.8% | 405.7 | 340°C | 380°C |
| Comparat ive Example 1 | Fe_{77.6}Si₁B₆ P_{5.5}C_{4.5}Ni₂ Cr₃V_{0.1}Mn_{0. 2}Zn_{0.1} | 51.5 | 65.8% | 350.4 | 380°C | 450°C |

As shown in Table 1, the atomic percentages of the Cu element are different in the iron-based amorphous alloy powders prepared from Examples 1-9. In Examples 1-7, the atomic percentages of the Cu element are all within 0.1-1.5%. Based on the data in the table, it can be concluded that the iron-based amorphous alloys in the above examples have better magnetic permeability and lower loss. However, the Cu element contents are high in Examples 8 and 9, and the loss is high.

Based on the data from Example 1 and Comparative Example 1, it can be concluded that the loss of the iron-based amorphous alloy powder without Cu element is much higher than that of the iron-based amorphous alloy powder provided in Example 1. The reason is that Cu atoms can provide nucleating points for nanocrystallization; as in Example 9, the high proportion of Cu element will lead to an increased probability of the nanocrystalline nucleating points close to each other to merge and grow, resulting in larger nanocrystalline grain size and increased loss value of the iron-based amorphous alloy powder.

### Example 10

This example provides an iron-based amorphous alloy powder, the powder has a spherical particle shape, and the iron-based amorphous alloy powder has a chemical formula of Fe_{77.1}Si₁B₅P_{5.5}C₄Ni₂Cr₃Cu_{0.5}V_{0.1}Mn_{0.2}Zn_{0.1}.

This example differs from Example 1 in that, in the powder of this example, an atomic percentage of the B element is 5%, an atomic percentage of the C element is 4%, and a sum of the atomic percentages of the B+P+C metal elements is 14.5%.

Other preparation methods and test conditions were the same as in Example 1.

### Example 11

This example provides an iron-based amorphous alloy powder, the powder has a spherical particle shape, and the iron-based amorphous alloy powder has a chemical formula of Fe_{89.1}Si₁B₁P₂C₁Ni₂Cr₃Cu_{0.5}V_{0.1}Mn_{0.2}Zn_{0.1}.

This example differs from Example 1 in that, in the powder of this example, an atomic percentage of the B element is 1%, an atomic percentage of the P element is 2%, an atomic percentage of the C element is 1%, and a sum of the atomic percentages of the B+P+C metal elements is 4%.

Other preparation methods and test conditions were the same as in Example 1.

### Example 12

This example provides an iron-based amorphous alloy powder, the powder has a spherical particle shape, and the iron-based amorphous alloy powder has a chemical formula of Fe_{85.1}Si₁B₃P₃C₂Ni₂Cr₃Cu_{0.5}V_{0.1}Mn_{0.2}Zn_{0.1}.

This example differs from Example 1 in that, in the powder of this example, an atomic percentage of the B element is 3%, an atomic percentage of the P element is 3%, an atomic percentage of the C element is 2%, and a sum of the atomic percentages of the B+P+C metal elements is 8%.

Other preparation methods and test conditions were the same as in Example 1.

### Example 13

This example provides an iron-based amorphous alloy powder, the powder has a spherical particle shape, and the iron-based amorphous alloy powder has a chemical formula of Fe_{81.1}Si₁B₃P₅C₄Ni₂Cr₃Cu_{0.5}V_{0.1}Mn_{0.2}Zn_{0.1}.

This example differs from Example 1 in that, in the powder of this example, an atomic percentage of the B element is 3%, an atomic percentage of the P element is 5%, an atomic percentage of the C element is 4%, and a sum of the atomic percentages of the B+P+C metal elements is 12%.

Other preparation methods and test conditions were the same as in Example 1.

### Example 14

This example provides an iron-based amorphous alloy powder, the powder has a spherical particle shape, and the iron-based amorphous alloy powder has a chemical formula of Fe_{80.1}Si₁B₆P₅C₂Ni₂Cr₃Cu_{0.5}V_{0.1}Mn_{0.2}Zn_{0.1}.

This example differs from Example 1 in that, in the powder of this example, an atomic percentage of the P element is 5%, an atomic percentage of the C element is 2%, and a sum of the atomic percentages of the B+P+C metal elements is 13%.

Other preparation methods and test conditions were the same as in Example 1.

### Example 15

This example provides an iron-based amorphous alloy powder, the powder has a spherical particle shape, and the iron-based amorphous alloy powder has a chemical formula of Fe_{81.1}Si₁B₆P₂C₄Ni₂Cr₃Cu_{0.5}V_{0.1}Mn_{0.2}Zn_{0.1}.

This example differs from Example 1 in that, in the powder of this example, an atomic percentage of the P element is 2%, an atomic percentage of the C element is 4%, and a sum of the atomic percentages of the B+P+C metal elements is 12%.

Other preparation methods and test conditions were the same as in Example 1.

### Example 16

This example provides an iron-based amorphous alloy powder, the powder has a spherical particle shape, and the iron-based amorphous alloy powder has a chemical formula of Fe_{68.1}Si₁B₈P₁₀C₇Ni₂Cr₃Cu_{0.5}V_{0.1}Mn_{0.2}Zn_{0.1}.

This example differs from Example 1 in that, in the powder of this example, an atomic percentage of the B element is 8%, an atomic percentage of the P element is 10%, an atomic percentage of the C element is 7%, and a sum of the atomic percentages of the B+P+C metal elements is 25%.

Other preparation methods and test conditions were the same as in Example 1.

### Example 17

This example provides an iron-based amorphous alloy powder, the powder has a spherical particle shape, and the iron-based amorphous alloy powder has a chemical formula of Fe_{72.6}Si₁B₆P₁₀C_{4.5}Ni₂Cr₃Cu_{0.5}V_{0.1}Mn_{0.2}Zn_{0.1}.

This example differs from Example 1 in that, in the powder of this example, an atomic percentage of the P element is 10%, and a sum of the atomic percentages of the B+P+C metal elements is 20.5%.

Other preparation methods and test conditions were the same as in Example 1.

### Example 18

This example provides an iron-based amorphous alloy powder, the powder has a spherical particle shape, and the iron-based amorphous alloy powder has a chemical formula of Fe_{80.6}Si₁B₆P_{5.5}C₁Ni₂Cr₃Cu_{0.5}V_{0.1}Mn_{0.2}Zn_{0.1}.

This example differs from Example 1 in that, in the powder of this example, an atomic percentage of the C element is 1%, and a sum of the atomic percentages of the B+P+C metal elements is 12.5%.

Other preparation methods and test conditions were the same as in Example 1.

### Example 19

This example provides an iron-based amorphous alloy powder, the powder has a spherical particle shape, and the iron-based amorphous alloy powder has a chemical formula of Fe_{73.1}Si₁B₁P_{5.5}C_{4.5}Ni₂Cr₃Cu_{0.5}V_{0.1}Mn_{0.2}Zn_{0.1}.

This example differs from Example 1 in that, in the powder of this example, an atomic percentage of the B element is 1%, and a sum of the atomic percentages of the B+P+C metal elements is 11%.

Other preparation methods and test conditions were the same as in Example 1.

Table 2 shows the properties of the iron-based amorphous alloy powders obtained in Example 1 and Examples 10-19.

**Table 2**

| | Chemical Formula | Magnetic Permeabilit y | Superpositio n Ratio (20 A) | Loss (1 MHz & 20 mT) | Glass Transition Temperature (°C) | Nano αFe Precipitatio n Temperature (°C) |
|---|---|---|---|---|---|---|
| Example 1 | Fe_{77.1}Si₁B₆P _{5.5}C_{4.5}Ni₂Cr₃ Cu_{0.5}V_{0.1}Mn _{0.2}Zn_{0.1} | 52.3 | 65.5% | 243.1 | 320°C | 360°C |
| Example 10 | Fe_{77.1}Si₁B₅P _{5.5}C₄Ni₂Cr₃ Cu_{0.5}V_{0.1}Mn _{0.2}Zn_{0.1} | 52.5 | 65.3% | 276.2 | 325°C | 365°C |
| Example 11 | Fe_{89.1}Si₁B₁P ₂C₁Ni₂Cr₃C u_{0.5}V_{0.1}Mn_{0. 2}Zn_{0.1} | 26.8 | 70.2% | 1530.2 | 410°C | 470°C |
| Example 12 | Fe_{85.1}Si₁B₃P ₃C₂Ni₂Cr₃C u_{0.5}V_{0.1}Mn₀. ₂Zn_{0.1} | 48.6 | 67.4% | 546.7 | 390°C | 455°C |
| Example 13 | Fe_{81.1}Si₁B₃P ₅C₄Ni₂Cr₃C u_{0.5}V_{0.1}Mn₀. ₂Zn_{0.1} | 51.3 | 64.3% | 432.2 | 380°C | 430°C |
| Example 14 | Fe_{80.1}Si₁B₆P ₅C₂Ni₂Cr₃C u_{0.5}V_{0.1}Mn₀. ₂Zn_{0.1} | 50.7 | 64.5% | 473.1 | 340°C | 385°C |
| Example 15 | Fe_{81.1}Si₁B₆P ₂C₄Ni₂Cr₃C u_{0.5}V_{0.1}Mn₀. ₂Zn_{0.1} | 50.4 | 64.7% | 525.4 | 340°C | 385°C |
| Example 16 | Fe_{68.1}Si₁B₈P ₁₀C₇Ni₂Cr₃C u_{0.5}V_{0.1}Mn₀. ₂Zn_{0.1} | 46.3 | 61.2% | 323.5 | 320°C | 360°C |
| Example 17 | Fe_{72.6}Si₁B₆P ₁₀C_{4.5}Ni₂Cr₃ Cu_{0.5}V_{0.1}Mn _{0.2}Zn_{0.1} | 47.5 | 62.6% | 302.7 | 320°C | 360°C |
| Example 18 | Fe_{80.6}Si₁B₆P _{5.5}C₁Ni₂Cr₃ Cu_{0.5}V_{0.1}Mn _{0.2}Zn_{0.1} | 48.6 | 63.2% | 321.4 | 330°C | 370°C |
| Example 19 | Fe_{73.1}Si₁B₁P _{5.5}C_{4.5}Ni₂Cr₃ Cu_{0.5}V_{0.1}Mn _{0.2}Zn_{0.1} | 47.9 | 62.5% | 365.2 | 330°C | 370°C |

Based on the data in Table 2, it can be concluded that in the case where the atomic percentages of the B+P+C elements are too high or too low in the iron-based amorphous alloy powder, as shown in the iron-based amorphous alloy powders provided in Examples 11-19, the permeability is not high enough and the loss is very severe and much higher than that of the iron-based amorphous alloy powder provided in Example 1.

### Example 20

This example provides an iron-based amorphous alloy powder, the powder has a spherical particle shape, and the iron-based amorphous alloy powder has a chemical formula of Fe_{72.1}Si₁B₆P_{5.5}C_{4.5}Ni₅Cr₅Cu_{0.5}V_{0.1}Mn_{0.2}Zn_{0.1}.

This example differs from Example 1 in that, in the powder of this example, an atomic percentage of the Ni element is 5%, and an atomic percentage of the Cr element is 5%.

Other preparation methods and test conditions were the same as in Example 1.

### Example 21

This example provides an iron-based amorphous alloy powder, the powder has a spherical particle shape, and the iron-based amorphous alloy powder has a chemical formula of Fe_{74.1}Si₁B₆P_{5.5}C_{4.5}Ni₅Cr₃Cu_{0.5}V_{0.1}Mn_{0.2}Zn_{0.1}.

This example differs from Example 1 in that, in the powder of this example, an atomic percentage of the Ni element is 5%.

Other preparation methods and test conditions were the same as in Example 1.

### Example 22

This example provides an iron-based amorphous alloy powder, the powder has a spherical particle shape, and the iron-based amorphous alloy powder has a chemical formula of Fe_{75.1}Si₁B₆P_{5.5}C_{4.5}Ni₂Cr₅Cu_{0.5}V_{0.1}Mn_{0.2}Zn_{0.1}.

This example differs from Example 1 in that, in the powder of this example, an atomic percentage of the Cr element is 5%.

Other preparation methods and test conditions were the same as in Example 1.

### Example 23

This example provides an iron-based amorphous alloy powder, the powder has a spherical particle shape, and the iron-based amorphous alloy powder has a chemical formula of Fe_{80.1}Si₁B₆P_{5.5}C_{4.5}Ni₁Cr₁Cu_{0.5}V_{0.1}Mn_{0.2}Zn_{0.1}.

This example differs from Example 1 in that, in the powder of this example, an atomic percentage of the Ni element is 1%, and an atomic percentage of the Cr element is 1%.

Other preparation methods and test conditions were the same as in Example 1.

Table 3 shows the properties of the iron-based amorphous alloy powders obtained in Example 1 and Examples 20-23.

**Table 3**

| | Chemical Formula | Magnetic Permeabil ity | Superposi tion Ratio (20 A) | Loss (1 MHz & 20 mT) | Rusty Condition (in salt mist for 48 H) | Glass Transition Temperat ure (°C) | Nano αFe Precipitati on Temperat ure (°C) |
|---|---|---|---|---|---|---|---|
| Example 1 | Fe_{77.1}Si₁B ₆P_{5.5}C_{4.5}N i₂Cr₃Cu_{0.5} V_{0.1}Mn_{0.2} Zn_{0.1} | 52.3 | 65.5% | 243.1 | Unrusted | 320°C | 360°C |
| Example 20 | Fe_{72.1}Si₁B ₆P_{5.5}C_{4.5}N i₅Cr₅Cu_{0.5} V_{0.1}Mn_{0.2} Zn_{0.1} | 50.8 | 63.2% | 256.1 | Unrusted | 320°C | 360°C |
| Example 21 | Fe_{74.1}Si₁B ₆P_{5.5}C_{4.5}N i₅Cr₃Cu_{0.5} V_{0.1}Mn_{0.2} Zn_{0.1} | 50.9 | 63.1% | 266.4 | Unrusted | 320°C | 360°C |
| Example 22 | Fe_{75.1}Si₁B ₆P_{5.5}C_{4.5}N i₂Cr₅Cu_{0.5} V_{0.1}Mn_{0.2} Zn_{0.1} | 50.3 | 63.5% | 263.1 | Unrusted | 320°C | 360°C |
| Example 23 | Fe_{80.1}Si₁B ₆P_{5.5}C_{4.5}N i₁Cr₁Cu_{0.5} V_{0.1}Mn_{0.2} Zn_{0.1} | 48.7 | 66.0% | 258.4 | Rusty | 320°C | 360°C |

Based on the data in Table 3, it can be concluded that in the case where the Ni element content in the iron-based amorphous alloy powder is too low, as shown in Example 23, the iron-based amorphous alloy powder has poor corrosion resistant and is more prone to corrosion and rusting.

### Example 24

This example provides an iron-based amorphous alloy powder, the powder has a spherical particle shape, and the iron-based amorphous alloy powder has a chemical formula of Fe_{77.5}Si₁B₆P_{5.5}C_{4.5}Ni₂Cr₃Cu_{0.5}.

This example differs from Example 1 in that the powder of this example includes no V, Mn and Zn elements.

Other preparation methods and test conditions were the same as in Example 1.

### Example 25

This example provides an iron-based amorphous alloy powder, the powder has a spherical particle shape, and the iron-based amorphous alloy powder has a chemical formula of Fe_{77.2}Si₁B₆P_{5.5}C_{4.5}Ni₂Cr₃Cu_{0.5}V_{0.1}Mn_{0.2}.

This example differs from Example 1 in that the powder of this example includes no Zn element.

Other preparation methods and test conditions were the same as in Example 1.

### Example 26

This example provides an iron-based amorphous alloy powder, the powder has a spherical particle shape, and the iron-based amorphous alloy powder has a chemical formula of Fe_{77.3}Si₁B₆P_{5.5}C_{4.5}Ni₂Cr₃Cu_{0.5}V_{0.1}Zn_{0.1}.

This example differs from Example 1 in that the powder of this example includes no Mn element.

Other preparation methods and test conditions were the same as in Example 1.

### Example 27

This example provides an iron-based amorphous alloy powder, the powder has a spherical particle shape, and the iron-based amorphous alloy powder has a chemical formula of Fe_{77.2}Si₁B₆P_{5.5}C_{4.5}Ni₂Cr₃Cu_{0.5}Mn_{0.2}Zn_{0.1}.

This example differs from Example 1 in that the powder of this example includes no V element.

Other preparation methods and test conditions were the same as in Example 1.

### Example 28

This example provides an iron-based amorphous alloy powder, the powder has a spherical particle shape, and the iron-based amorphous alloy powder has a chemical formula of Fe_{77.2}Si₁B₆P_{5.5}C_{4.5}Ni₂Cr₃Cu_{0.5}V_{0.4}Mn_{0.2}Zn_{0.1}.

This example differs from Example 1 in that an automatic percentage of the V element is 0.4% in the powder of this example.

Other preparation methods and test conditions were the same as in Example 1.

### Example 29

This example provides an iron-based amorphous alloy powder, the powder has a spherical particle shape, and the iron-based amorphous alloy powder has a chemical formula of Fe_{76.4}Si₁B₆P_{5.5}C_{4.5}Ni₂Cr₃Cu_{0.5}V_{0.2}Mn_{0.6}Zn_{0.1}.

This example differs from Example 1 in that, in the powder of this example, an automatic percentage of the V element is 0.2%, and an automatic percentage of the Mn element is 0.6%.

Other preparation methods and test conditions were the same as in Example 1.

### Example 30

This example provides an iron-based amorphous alloy powder, the powder has a spherical particle shape, and the iron-based amorphous alloy powder has a chemical formula of Fe_{76.1}Si₁B₆P_{5.5}C_{4.5}Ni₂Cr₃Cu_{0.5}V_{0.2}Mn_{0.2}Zn_{0.4}.

This example differs from Example 1 in that, in the powder of this example, an automatic percentage of the V element is 0.2%, and an automatic percentage of the Zn element is 0.4%.

Other preparation methods and test conditions were the same as in Example 1.

Table 4 shows the properties of the iron-based amorphous alloy powders obtained in Example 1 and Examples 24-30.

**Table 4**

| | Chemical Formula | Magnetic Permeabilit y | Superpositi on Ratio (20 A) | Loss (1 MHz & 20 mT) | Glass Transition Temperatur e (°C) | Nano αFe Precipitatio n Temperatur e (°C) |
|---|---|---|---|---|---|---|
| Example 1 | Fe_{77.1}Si₁B₆P _{5.5}C_{4.5}Ni₂Cr ₃Cu_{0.5}V_{0.1}M n_{0.2}Zn_{0.1} | 52.3 | 65.5% | 243.1 | 320°C | 360°C |
| Example 24 | Fe_{77.5}Si₁B₆P _{5.5}C_{4.5}Ni₂Cr ₃Cu_{0.5} | 49.5 | 65.4% | 350.2 | 325°C | 370°C |
| Example 25 | Fe_{77.2}Si₁B₆P _{5.5}C_{4.5}Ni₂Cr ₃Cu_{0.5}V_{0.1}M n_{0.2} | 50.1 | 65.3% | 335.1 | 330°C | 370°C |
| Example 26 | Fe_{77.3}Si₁B₆P _{5.5}C_{4.5}Ni₂Cr ₃Cu_{0.5}V_{0.1}Z n_{0.1} | 50.6 | 65.1% | 330.2 | 325°C | 365°C |
| Example 27 | Fe_{77.2}Si₁B₆P _{5.5}C_{4.5}Ni₂Cr ₃Cu_{0.5}Mn_{0.2} Zn_{0.1} | 50.4 | 65.2% | 330.5 | 320°C | 360°C |
| Example 28 | Fe_{77.2}Si₁B₆P _{5.5}C_{4.5}Ni₂Cr ₃Cu_{0.5}V_{0.4}M n_{0.2}Zn_{0.1} | 51.6 | 65.1% | 360.7 | 330°C | 375°C |
| Example 29 | Fe_{76.4}Si₁B₆P _{5.5}C_{4.5}Ni₂Cr ₃Cu_{0.5}V_{0.2}M n_{0.6}Zn_{0.1} | 51.8 | 64.9% | 371.6 | 320°C | 360°C |
| Example 30 | Fe_{76.1}Si₁B₆P _{5.5}C_{4.5}Ni₂Cr ₃Cu_{0.5}V_{0.2}M n_{0.2}Zn_{0.4} | 50.3 | 64.8% | 356.7 | 340°C | 380°C |

Based on the data from Example 1 and Example 24, it can be seen that the loss of iron-based amorphous alloy powder is significantly higher when no trace transition metal elements are added such as V, Mn and Zn.

It can be seen from Example 1 and Examples 25-27 that the loss is lower when the three trace transition metal elements, V, Mn and Zn, are added together.

Based on the data from Example 1 and Examples 28-29, it can be seen that the loss of the iron-based amorphous alloy powder will be higher no matter which one of the three trace transition metal elements, V, Mn and Zn, is added excessively.

### Examples 31-38

The iron-based amorphous alloy powders prepared from Examples 31-38 have the same chemical formula of Fe_{77.1}Si₁B₆P_{5.5}C_{4.5}Ni₂Cr₃Cu_{0.5}V_{0.1}Mn_{0.2}Zn_{0.1}, and the preparation methods of the examples differ from Example 1 only in sintering conditions. The specific sintering conditions of each example are shown in Table 5.

Table 5 shows the properties of the iron-based amorphous alloy powders obtained in Example 1 and Examples 31-38.

**Table 5**

| | Sintering Condition | Magnetic Permeability | Loss (1 MHz&20 mT) |
|---|---|---|---|
| Example 1 | 360°C*2H | 52.3 | 243.1 |
| Example 31 | 360°C*0.5H | 43.7 | 476.3 |
| Example 32 | 360°C*1H | 50.8 | 347.6 |
| Example 33 | 360°C*4H | 53.5 | 367.1 |
| Example 34 | 340°C*2H | 44.2 | 423.4 |
| Example 35 | 380°C*2H | 53.4 | 278.8 |
| Example 36 | 400°C*2H | 53.8 | 286.4 |
| Example 37 | 420°C*2H | 45.2 | 542.2 |
| Example 38 | 440°C*2H | 26.5 | 1253.2 |

The iron-based amorphous alloy powders of Examples 31-38 are the same as Example 1, and accordingly, the glass transition temperature and the nano αFe precipitation temperature are the same as those provided in Example 1.

Based on the data from Example 1 and Examples 31-33, it can be seen that the loss of the iron-based amorphous alloy powders are increased significantly by being sintered for a too long or too short time.

Based on the data from Example 1 and Example 34, it can be seen that when the sintering temperature is too low during the sintering process, the magnetic permeability of the iron-based amorphous alloy powder will decrease and the loss will be larger.

Based on the data from Example 1 and Examples 37-38, it can be seen that when the sintering temperature is too high during the sintering process, by-products will be generated, greatly reducing the magnetic permeability of the iron-based amorphous alloy powder, and severely increasing the loss at the same time.

### Comparative Example 2

This example provides an iron-based amorphous alloy powder, the powder has a spherical particle shape, and the iron-based amorphous alloy powder has a chemical formula of Fe_{96.5}Si_{3.5}. In this comparative example, a sintering temperature is 700°C and a sintering time is 2 h.

Other preparation methods and test conditions were the same as in Example 1.

### Comparative Example 3

This example provides an iron-based amorphous alloy powder, the powder has a spherical particle shape, and the iron-based amorphous alloy powder has a chemical formula of Fe₉₂Si_{3.5}Cr_{4.5}. In this comparative example, a sintering temperature is 750°C and a sintering time is 2 h.

Other preparation methods and test conditions were the same as in Example 1.

### Comparative Example 4

This example provides an iron-based amorphous alloy powder, the powder has a spherical particle shape, and the iron-based amorphous alloy powder has a chemical formula of Fe₈₅Si_{9.5}Al_{5.5}. In this comparative example, a sintering temperature is 650°C and a sintering time is 2 h.

Other preparation methods and test conditions were the same as in Example 1.

Table 6 shows the properties of the iron-based amorphous alloy powders obtained in Example 1 and Comparative Examples 2-4.

**Table 6**

| | Chemical Formula | Magnetic Permeabili ty | Superpositi on Ratio (20 A) | Loss (1 MHz & 20 mT) | Glass Transition Temperatur e (°C) | Nano αFe Precipitati on Temperatur e (°C) |
|---|---|---|---|---|---|---|
| Example 1 | Fe_{77.1}Si₁B₆ P_{5.5}C_{4.5}Ni₂ Cr₃Cu_{0.5}V_{0. 1}Mn_{0.2}Zn_{0.1} | 52.3 | 65.5% | 243.1 | 320°C | 360°C |
| Comparati ve Example 2 | Fe_{96.5}Si_{3.5} | 51.6 | 68.2% | 785.4 | - | - |
| Comparati ve Example 3 | Fe₉₂Si_{3.5}Cr 4.5 | 52.5 | 65.5% | 805.3 | - | - |
| Comparati ve Example 4 | Fe₈₅Si_{9.5}Al 5.5 | 60.2 | 59.8% | 385.7 | - | - |

Comparative Examples 2-4 are all crystalline substances, so there is no glass transition temperature and nano αFe precipitation temperature.

Based on the data from Example 1 and Comparative Examples 2-3, it can be seen that the iron-based amorphous alloy provided by the present application has more excellent characteristics than other alloy powders in terms of magnetic permeability, superimposed current and loss.

The applicant declares that although the embodiments of the present application are described above, the protection scope of the present application is not limited to the embodiments. The protection scope of the present application is defined by the claims.

## Claims

1. An iron-based amorphous alloy powder, comprising a Cu element; the iron-based amorphous alloy powder has a spherical particle shape.

2. The iron-based amorphous alloy powder according to claim 1, wherein the iron-based amorphous alloy powder further comprises a metalloid element and a main transition metal element.

3. The iron-based amorphous alloy powder according to claim 2, wherein the metalloid element comprises any one or a combination of at least two of B, P, Si or C.

4. The iron-based amorphous alloy powder according to claim 2 or 3, wherein the main transition metal element comprises Ni and/or Cr;
optionally, the iron-based amorphous alloy powder further comprises a trace transition metal element;
optionally, the trace transition metal element comprises any one or a combination of at least two of V, Mn or Zn.

5. The iron-based amorphous alloy powder according to any one of claims 1 to 4, wherein the iron-based amorphous alloy powder has a chemical formula of aFe-bSi-cB-dP-eC-fNi-gCr-hCu-iV-jMn-kZn;
optionally, an atomic percentage of each element in the chemical formula is 64.8%≤a≤80.2%, 0%≤b≤2%, 5%≤c≤10%, 3%≤d≤6.2%, 1.2%≤e≤5.5%, 0.5%≤f≤4%, 1%<g<5%, 0.1%≤h≤1.5%, 0%≤i≤0.2%, 0%≤j≤0.6%, 0%<k<0.2%; and optionally 64.8%≤a≤80.2%,0%≤b≤2%, 5%≤c≤8%, 4%≤d≤6%, 3%≤e≤5%, 1%<f<3%, 2%≤g≤4%, 0.5%≤h≤1.2%, 0.02%≤i≤0.12%, 0.1%≤j≤0.4%, 0.1%≤k≤0.15%;
optionally, a sum of the atomic percentages of B, P and C in the metalloid element is 14%-18%.

6. The iron-based amorphous alloy powder according to any one of claims 1 to 5, wherein the iron-based amorphous alloy powder has a D10 of 2-5 µm;
optionally, the iron-based amorphous alloy powder has a D50 of 8-12 µm;
optionally, the iron-based amorphous alloy powder has a D90 of 20-30 µm.

7. A preparation method of the iron-based amorphous alloy powder according to any one of claims 1 to 6, comprising the following steps:
(1) melting a master alloy to obtain an iron-based amorphous alloy iron fluid; the master alloy comprises a Cu element;
(2) treating the iron-based amorphous alloy iron fluid in step (1) by a water-gas combined atomization to obtain the iron-based amorphous alloy powder.

8. The preparation method of the iron-based amorphous alloy powder according to claim 7, wherein the melting in step (1) has a temperature of 1300-1500°C;
optionally, the melting in step (1) has a time of 80-150 min;
optionally, the water-gas combined atomization treatment in step (2) comprises feeding the iron-based amorphous alloy iron fluid in step (1) into an atomization tower, then breaking the iron-based amorphous alloy iron fluid in step (1) into fine metal droplets by applying water and gas atomization media to the iron-based amorphous alloy iron fluid in step (1) in the atomization tower, and then cooling the fine metal droplets to obtain the iron-based amorphous alloy powder treated by the water-gas combined atomization;
optionally, the water has a pressure of 100-150 MPa;
optionally, the gas has a pressure of 0.5-1.0 MPa;
optionally, the gas is a protective gas;
optionally, the protective gas comprises N₂ and Ar₂;.
optionally, the iron-based amorphous alloy powder treated by the water-gas combined atomization is further baked and gas-flow graded.

9. The preparation method of the iron-based amorphous alloy powder according to claim 7 or 8, wherein the preparation method comprises the following steps:
(1) melting a master alloy at 1300-1500°C for 80-150 min to obtain an iron-based amorphous alloy iron fluid; the master alloy comprises a Cu element;
(2) feeding the iron-based amorphous alloy iron fluid in step (1) into an atomization tower, then breaking the iron-based amorphous alloy iron fluid in step (1) into fine metal droplets by applying water and N₂ atomization media, which have pressures of 100-150 MPa and 0.5-1.0 MPa, respectively, to the iron-based amorphous alloy iron fluid in step (1) in the atomization tower, then cooling the fine metal droplets, and then performing baking and gas-flow grading to obtain the iron-based amorphous alloy powder.

10. A magnetic powder core, comprising the iron-based amorphous alloy powder according to any one of claims 1 to 6, a first inorganic layer coated on the surface of the iron-based amorphous alloy powder, a second inorganic layer coated on the surface of the first inorganic layer, and an organic layer coated on the surface of the second inorganic layer.

11. The magnetic powder core according to claim 10, wherein the first inorganic layer comprises phosphate;
optionally, the second inorganic layer comprises any one or a combination of at least two of sodium silicate, potassium silicate, a silane coupling agent, magnesium silicate, or nano SiO₂;
optionally, the organic layer comprises a resin;
optionally, the resin comprises any one or a combination of at least two of polyvinyl butyral, an epoxy resin, a silicone resin or a phenolic resin.

12. A method for preparing the magnetic powder core according to claim 10 or 11, comprising coating the first inorganic layer, the second inorganic layer and the organic layer in sequence on the surface of the iron-based amorphous alloy powder according to any one of claims 1 to 6, and then performing sintering;
optionally, the sintering has a temperature of 340-440°C, optionally 360-400°C;
optionally, the sintering has a time of 0.5-4 h, optionally 1.5-2.5 h.
